Europäisches Patentamt

European Patent Office

Office européen des brevets

(19)

(11) Numéro de publication : **0 506 569 A1**

# (12) DEMANDE DE BREVET EUROPEEN

(21) Numéro de dépôt : **92400847.7**

(22) Date de dépôt : **26.03.92**

(51) Int. Cl.⁵ : **H02G 1/14,** B29C 63/20, B29C 61/06

(30) Priorité : **29.03.91 FR 9103864**

(43) Date de publication de la demande : **30.09.92 Bulletin 92/40**

(84) Etats contractants désignés : **BE CH DE ES GB LI LU PT**

(71) Demandeur : **SOCIETE INDUSTRIELLE DE LIAISONS ELECTRIQUES - SILEC 64bis, rue de Monceau F-75008 Paris (FR)**

(72) Inventeur : **Hebert, Emmanuel 33 rue Etienne Thibault F-77130 Montereau (FR)**
Inventeur : **Tissier, Guy 1 rue Atanase Housset F-77130 St Germain Laval (FR)**
Inventeur : **Arette-Hourquet, Damien 47 rue de la Couture F-77130 Cannes-Ecluse (FR)**

(74) Mandataire : **Fruchard, Guy et al CABINET BOETTCHER 23, rue la Boétie F-75008 Paris (FR)**

(54) **Manchon élastique conditionné sur un organe support utilisable pour une pose du manchon.**

(57) L'ensemble selon l'invention comporte un organe support tubulaire rigide (1) traversé par une ouverture (2) fermée par un clapet anti-retour (3), un manchon élastique (4) disposé à l'intérieur de l'organe support tubulaire (1) et ayant des extrémités fixées de façon étanche à celui-ci, et une enceinte étanche (9) entourant l'organe support tubulaire et délimitant un volume interne soumis à une pression inférieure à la pression atmosphérique.

FIG_1

EP 0 506 569 A1

La présente invention concerne un manchon élastique conditionné sur un support utilisable pour une pose du manchon.

L'invention s'applique particulièrement, bien que non exclusivement, au gainage par un manchon élastique d'une extrémité de câble ou d'une jonction de câbles.

On sait que pour effectuer le gainage d'un objet au moyen d'un manchon élastique sans exercer de force de frottement sur l'objet, il est nécessaire de dilater le manchon élastique préalablement à sa pose, d'amener le manchon élastique en position dilatée en regard de l'objet, puis de laisser le manchon élastique se rétracter sur l'objet. Lorsque cette opération est réalisée en atelier, il est relativement simple de disposer le manchon élastique à l'intérieur d'un support tubulaire approprié ayant une paroi perforée reliée à un organe de mise en dépression par l'intermédiaire d'une vanne. Lorsque le support est relié à l'organe de mise en dépression, le manchon est aspiré contre la surface interne du support. L'objet à gainer peut alors être introduit à l'intérieur du manchon dilaté puis la liaison avec l'organe de mise en dépression est interrompue et mise à l'échappement, ce qui provoque la rétraction du manchon élastique sur l'objet.

Lorsque le gainage doit être effectué sur un chantier, il est plus difficile de disposer d'un organe de mise en dépression. Pour conditionner un manchon élastique sur un support, on propose donc dans le document FR-A-2 423 077, de monter un manchon élastique sur un support tubulaire comportant une paroi latérale traversée par un orifice, d'amener le manchon élastique en position dilatée soit par une surpression à l'intérieur du manchon élastique soit par une dépression dans l'espace compris entre la surface externe du manchon élastique et la surface interne du support tubulaire, puis de fermer l'orifice de la paroi latérale de l'organe support tubulaire afin de maintenir le manchon élastique en position dilatée jusqu'au moment de son utilisation. Ainsi que le souligne ce document, il existe toutefois un risque de fuites au niveau de l'organe fermant l'orifice ou au niveau de la fixation du manchon élastique sur le support, ainsi qu'un risque de porosité du manchon élastique, de sorte que le maintien du manchon élastique en position dilatée ne peut pas être assuré de façon certaine. Ce document propose également de maintenir le manchon élastique en position dilatée par l'introduction d'un liquide neutre à l'intérieur du manchon élastique contenu dans une enceinte étanche ou d'effectuer la dilatation du manchon élastique sur le chantier au moyen d'un dispositif équipé d'une pompe à main. Ces dispositifs impliquent une manipulation, certes peu complexe, mais néanmoins fastidieuse.

Un but de l'invention est de proposer un manchon élastique conditionné sur un organe support utilisable pour une pose du manchon par des opérations très simples et permettant un stockage prolongé.

En vue de la réalisation de ce but, on prévoit selon l'invention un ensemble comportant un organe support tubulaire rigide comprenant une paroi latérale traversée par au moins un orifice équipé d'un organe de fermeture, un manchon élastique ayant une section au repos inférieure à une section de l'organe support tubulaire, ce manchon élastique étant disposé à l'intérieur de l'organe tubulaire et ayant des extrémités fixées de façon étanche à l'organe tubulaire, et une enceinte étanche entourant l'organe support tubulaire et délimitant un volume interne soumis à une pression inférieure à la pression atmosphérique.

Selon une version avantageuse de l'invention, l'organe de fermeture de l'orifice dans la paroi latérale du support tubulaire comprend un clapet anti-retour disposé pour permettre un mouvement d'air depuis un espace compris entre l'organe support tubulaire et le manchon élastique vers l'extérieur de cet espace. De préférence, le clapet anti-retour est formé par un segment de matière flexible étanche à l'air fixé sur un côté de l'orifice.

Selon un autre aspect avantageux de l'invention, l'enceinte étanche est réalisée à partir d'un film souple et des couvercles rigides perforés sont de préférence disposés aux extrémités de l'organe support tubulaire.

D'autres caractéristiques et avantages de l'invention apparaîtront à la lecture de la description qui suit d'un mode de réalisation particulier non limitatif de l'invention en liaison avec les dessins ci-joints parmi lesquels :

– la figure 1 est une vue en coupe axiale d'un ensemble selon l'invention dans une première étape de sa réalisation,

– la figure 2 est une vue en coupe analogue à celle de la figure 1, dans une deuxième étape de réalisation,

– la figure 3 est une vue en coupe analogue à celle de la figure 1, dans une première étape d'utilisation de l'ensemble selon l'invention,

– la figure 4 est une vue en coupe axiale du manchon sur son organe support tubulaire juste avant la pose du manchon.

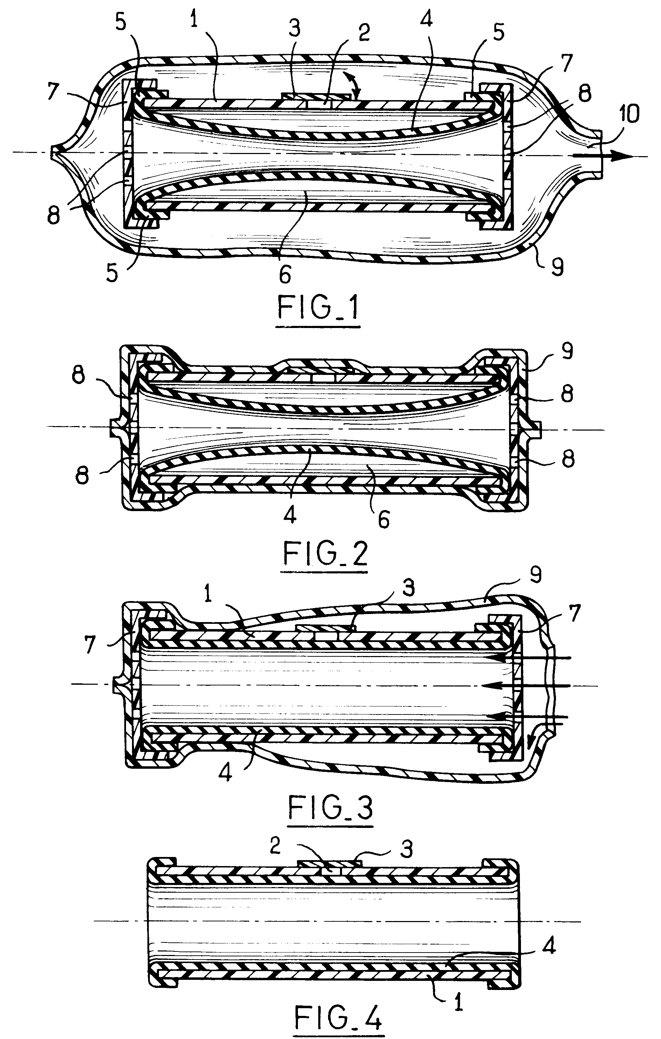

En référence aux dessins, l'ensemble selon l'invention comporte un organe support tubulaire rigide 1, par exemple un tronçon de tube cylindrique en matière plastique rigide, dont la paroi latérale est traversée par un orifice 2. L'orifice 2 est recouvert par un segment de matière flexible étanche à l'air 3, par exemple un segment de bande de matière plastique souple, fixé sur la surface externe de l'organe support tubulaire, sur un côté de l'orifice 2, par exemple par collage. Le segment de matière flexible 3 peut ainsi battre vers l'extérieur comme illustré par la flèche double sur la figure 1 et forme donc un clapet anti-retour.

Un manchon élastique 4, par exemple un manchon en caoutchouc, ayant une section au repos inférieure à la section de l'organe support tubulaire est disposé à l'intérieur de l'organe support tubulaire 1 et a ses extrémités fixées de façon étanche avec l'organe support tubulaire.

Dans le mode de réalisation illustré, les extrémités 5 du manchon élastique 4 ont été rabattues sur les extrémités de l'organe support tubulaire 1 et sont maintenues de façon étanche soit par l'élasticité proprement dite du manchon qui tend à appliquer les extrémités 5 sur la surface externe de l'organe support tubulaire 1, soit par collage des extrémités 5 du manchon sur l'organe support tubulaire 1, soit encore par mise en place d'une bague de maintien sur les extrémités 5. Le manchon élastique 4 et l'organe support tubulaire 1 délimitent ainsi un espace annulaire 6 entre la surface latérale externe du manchon 4 et la surface latérale interne de l'organe support tubulaire 1. Vis-à-vis de l'espace annulaire 6, le clapet anti-retour formé par le segment de bande flexible 3 est donc disposé pour permettre un mouvement d'air depuis l'espace annulaire 6 et interdire un mouvement de l'air vers l'intérieur de l'espace annulaire 6.

Dans le mode de réalisation préféré illutré, des couvercles rigides 7 comportant des perforations 8 sont disposés aux extrémités de l'organe support tubulaire 1 et recouvrent également les extrémités du manchon élastique. Les couvercles 7 sont par exemple réalisés en matière plastique rigide. Une enceinte 9 en matière étanche à l'air, par exemple un sac en matière plastique souple tel que du polyéthylène, est disposé pour entourer l'organe support tubulaire 1 et le manchon élastique 4 porté par ce support.

Dans l'étape illustrée sur la figure 1, l'organe support tubulaire 1 équipé du manchon élastique 4 et des couvercles 7 a été simplement introduit dans l'enceinte étanche 9. Le manchon élastique 4 est alors en équilibre sous le seul effet des forces d'élasticité résultant de la traction qui a été exercée sur les extrémités 5 pour les fixer aux extrémités de l'organe support tubulaire 1. A partir de cette étape, on relie un orifice 10 de l'enceinte étanche 9 à un organe destiné à abaisser la pression à l'intérieur de l'enceinte étanche 9, par exemple une pompe, cette opération étant de préférence effectuée en atelier. Au cours de cette opération, la pression s'abaisse progressivement à l'intérieur de l'enceinte étanche 9. En raison de la disposition du clapet anti-retour 3 et des perforations 8 dans les couvercles 7 la pression s'équilibre de façon constante entre le volume en regard de la surface interne du manchon élastique 4 et l'espace annulaire 6 compris entre l'organe support tubulaire 1 et le manchon élastique 4. Le manchon élastique 4 garde donc la position d'équilibre représentée sur la figure 1. Dans le cas d'une enceinte étanche 9 en matière souple comme dans le mode de réalisation illustré, l'enceinte étanche 9 vient progressivement se plaquer sur la surface externe de l'organe support tubulaire 1 et des couvercles 7. L'ouverture 10 est alors scellée et l'on obtient le manchon élastique conditionné illustré par la figure 2.

A ce propos, on remarquera qu'à cette étape le manchon élastique 4 n'est toujours pas dilaté mais l'espace annulaire 6 compris entre le manchon élastique 4 et l'organe support tubulaire 1 est à une pression inférieure à la pression atmosphérique tout comme l'ensemble du volume compris à l'intérieur de l'enceinte étanche 9. On remarquera également qu'il importe peu que le clapet anti-retour 3 présente des caractéristiques d'étanchéité peu importantes puisque ses deux faces sont alors soumises à la même dépression. L'ensemble selon l'invention peut donc être stocké très longtemps sans risque de fuite.

Lors de l'utilisation, l'enceinte étanche 9 est ouverte, par exemple par découpage d'une extrémité comme illustré sur la figure 3, et l'air pénêtre alors à l'intérieur de l'enceinte étanche 9 autour de l'organe support 1 et en regard de la surface interne du manchon élastique 4 à travers les perforations 8 des couvercles 7. En raison de la présence du clapet anti-retour 3, le volume annulaire 6 compris entre la face interne de l'organe support tubulaire 1 et la face externe du manchon élastique 4 reste soumis à la même pression inférieure à la pression atmosphérique que dans l'étape précédente. La pression atmosphérique tend donc à plaquer la paroi du manchon élastique 4 contre la face interne de l'organe support tubulaire 1 et le manchon élastique 4 prend la position dilatée illustrée par la figure 3. L'enceinte étanche 9 est ensuite retirée ainsi que les couvercles 7 et l'on obtient alors le manchon prêt à poser illustré par la figure 4.

De façon habituelle, lorsque le manchon est ainsi plaqué à l'intérieur d'un support tubulaire, le manchon élastique 4 est disposé autour de l'objet à gainer et l'orifice 2 est ouvert en arrachant le segment de matière flexible 3 formant le clapet anti-retour. Les pressions s'équilibrant de part et d'autre de la paroi latérale du manchon élastique 4, celui-ci se rétracte et ses extrémités sont libérées de l'organe support soit en retirant l'élément qui les retient soit en découpant les extrémités du manchon élastique.

On remarquera que les opérations d'ouverture de l'enceinte étanche 9 et de mise en place du manchon 4 sur l'objet à gainer peuvent être effectuées de façon très rapide. Le clapet anti-retour 3 n'est donc utilisé que pendant un temps très bref et il peut donc être réalisé de manière très simple, par exemple un morceau de ruban légèrement adhésif apposé sur l'orifice 2 pour permettre son soulèvement lors de la mise en dépression de l'enceinte et son placage sur l'orifice 2 lors de l'ouverture ultérieure de cette enceinte.

Bien entendu l'invention n'est pas limitée au mode de réalisation décrit et on peut y apporter des variantes de réalisation sans sortir du cadre de l'invention. En particulier, dans le mode de réalisation préféré décrit, on a prévu des couvercles rigides 7 disposés aux extrémités de l'organe support tubulaire 1 afin que l'enceinte élastique 9 soit supportée lorsque son volume interne est soumis à une pression inférieure à la pression atmosphérique. Cette disposition évite un risque de déchirement de l'enceinte étanche 9. Ces couvercles 7 pourront bien entendu être supprimés si on dispose d'un film suffisamment résistant pour former l'enceinte étanche 9 ou encore si l'enceinte étanche 9 est elle-même réalisée au moyen d'un matériau rigide. On pourra également remplacer le clapet anti retour 3 formé d'un segment de bande flexible par un organe de fermeture présentant une structure quelconque, par exemple un petit clapet rigide maintenu très légèrement écarté de l'orifice 2 pendant l'étape de mise en dépression de l'intérieur de l'enceinte étanche 9 puis écrasé pour assurer la fermeture de l'orifice 2 après scellement de l'enceinte étanche 9.

**Revendications**

1. Manchon élastique conditionné sur un organe support utilisable pour une pose du manchon, comportant un organe support tubulaire rigide (1) comprenant une paroi latérale traversée par au moins un orifice (2) équipé d'un organe de fermeture (3), et un manchon élastique (4) ayant une section au repos inférieure à une section de l'organe support tubulaire, ce manchon élastique (4) étant disposé à l'intérieur de l'organe support tubulaire et ayant des extrémités (5) fixées de façon étanche avec l'organe support tubulaire (1) caractérisé en ce qu'il comporte une enceinte étanche (9) entourant l'organe support tubulaire et délimitant un volume interne soumis à une pression inférieure à la pression atmosphérique.

2. Manchon élastique conditionné selon la revendication 1, caractérisé en ce que l'organe de fermeture de l'orifice (2) dans la paroi latérale du support tubulaire (1) comprend un clapet anti-retour (3) disposé pour permettre un mouvement d'air depuis un espace (6) compris entre l'organe support tubulaire (1) et le manchon élastique (4) vers l'extérieur de cet espace.

3. Manchon élastique conditionné selon la revendication 2, caractérisé en ce que le clapet anti-retour est formé par un segment de matière flexible (3) étanche à l'air fixé sur un côté de l'orifice (2).

4. Manchon élastique conditionné selon l'une des revendications 1 à 3, caractérisé en ce que l'enceinte étanche (9) est réalisée à partir d'un film souple.

5. Manchon élastique conditionné selon la revendication 4, caractérisé en ce que des couvercles rigides perforés (7) sont disposés aux extrémités de l'organe support tubulaire (1).

FIG_1

FIG_2

FIG_3

FIG_4

Office européen
des brevets

**RAPPORT DE RECHERCHE EUROPEENNE**

Numero de la demande

EP 92 40 0847

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 391 661 (IZRAELI)<br>* colonne 1, ligne 13 - colonne 3, ligne 29 *<br>* figures 1-6 *<br>--- | 1 | H02G1/14<br>B29C63/20<br>B29C61/06 |
| A,D | FR-A-2 423 077 (SOCIETE INDUSTRIELLE DE LIAISONS ELECTRIQUES S.A.)<br>* page 5, ligne 5 - ligne 30 *<br>* revendications 1-15; figures 2-7 *<br>--- | 1 | |
| A | EP-A-0 342 802 (SMITHS INDUSTRIES PUBLIC LIMITED COMPANY)<br>* colonne 3, ligne 8 - ligne 32 *<br>* figures 3B-3D *<br>----- | 1 | |
| | | | **DOMAINES TECHNIQUES RECHERCHES (Int. Cl.5)**<br><br>H02G<br>B29C<br>F16L |

Le présent rapport a été établi pour toutes les revendications

| Lieu de la recherche | Date d'achèvement de la recherche | Examinateur |
|---|---|---|
| BERLIN | 07 JUILLET 1992 | RICHARDS T. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)

6